# EUROPÄISCHE PATENTSCHRIFT

(11) **EP 1 449 645 B1**
(45) Veröffentlichungstag und Bekanntmachung des Hinweises auf die Patenterteilung: **22.07.2009**
(21) Anmeldenummer: 03405101.1
(22) Anmeldetag: 19.02.2003
(51) Int. Cl.: B32B 27/08, C08J 7/04, C09D 131/04, B65D 65/14

(54) **Verpackungsfolie**
Packaging film
Feuille d'emballage

(43) Veröffentlichungstag der Anmeldung: 25.08.2004
(73) Patentinhaber: Alcan Technology & Management Ltd., 8212 Neuhausen am Rheinfall (CH)
(72) Erfinder: Cerf, Sabine, 57400 Sarrebourg (FR)

(56) Entgegenhaltungen:
- EP-A- 0 891 930
- WO-A-01/25109

## Beschreibung

Die Erfindung betrifft eine Verpackungsfolie nach dem Oberbegriff des Anspruchs 1.

Eine übliche Verpackung von quader- oder würfelförmigen Nahrungsmittelprodukten, wie z.B. Bouillonwürfeln, besteht aus einer goldlackierten oder farbig bedruckten Aluminiumfolie als Aussenseite und einer Papierschicht als Innenseite der Verpackung. Zwischen der Aluminiumfolie und der Papierschicht ist eine dünne Wachsschicht angeordnet. Eine Erwärmung des verpackten Würfels führt zu einem Schmelzen des Wachses, welches durch das Papier diffundiert und zu einer Verklebung der überlappenden Teile der Verpackungsfolie führt.

Die WO-A-01/25109 offenbart eine Kunststofffolie zum Verpacken von würfelförmigen Produkten, wie z.B. Suppenwürfeln. Die aus einem Polyolefin, vorzugsweise aus orientiertem Polyethylen (OPE) oder orientiertem Polypropylen (OPP), bestehende Kunststofffolie zeichnet sich durch eine leichte Faltbarkeit aus. Die Kunststofffolie kann einseitig metallisiert und mit einer Klebe- oder Siegelschicht versehen sein, welche beispielsweise nur dort aufgebracht ist, wo sie gebraucht wird. Weiter kann auf der Kunststofffolie ein gegebenenfalls mit einem Abdecklack versehener Farbauftrag vorgesehen sein.

Eine aus der EP-A-0 870 695 bekannte Verpackungsfolie für Bouillonwürfel besteht aus einem Film auf der Basis von Polyolefin, auf dessen Aussenseite an vorbestimmten Positionen eine Kaltsiegelschicht angeordnet ist. Die Innenseite des Polyolefinfilms ist mit einer Antihaftbeschichtung versehen. Im Bedarfsfall kann der Polyolefinfilm zur Erzeugung einer Barriereschicht gegen den Durchtritt von Sauerstoff metallisiert sein.

Eine Verpackungsfolie für würfelförmige Produkte auf der Basis eines Polyolefinfilms ist auch aus der EP-A-0 990 596 bekannt.

Aus EP-A 0 891 930 ist eine Verpackungsfolle zur Verpackung kleiner Gegenstände mittels Dreheinschlag bekannt. Hierzu ist eine kalt siegelbare Schicht streifenförmig ausserhalb des für den zu verpackenden Gegenstand vorgesehenen Umwicklungsbereiches auf der Innenseite der Verpackungsfolie angeordnet. Auf der einen Seite eines Trägerfilms ist eine Barriereschicht und auf der Barriereschicht eine Bedruckung mit einer Schutzlackschicht angeordnet. Die Kaltsiegelstreifen befinden sich auf der anderen Seite des Trägerfilms.

Der Erfindung liegt die Aufgabe zugrunde, eine Verpackungsfolie der eingangs genannten Art auf der Basis eines Kunststofffilms zu schaffen, welche hinsichtlich der Barriereeigenschaften, der Festigkeit, der Faltbarkeit und der optischen Erscheinung hohen Ansprüchen zu genügen vermag. Die Verpackungsfolie soll zudem kostengünstig hergestellt und auf den üblichen Verpackungsmaschinen eingesetzt werden können.

Zur erfindungsgemässen Lösung der Aufgabe führt eine Verpackungsfolie mit den Merkmalen des Anspruchs 1.

Die erfindungsgemässe Verpackungsfolie zeichnet sich dadurch aus, dass der als Basissubstrat eingesetzte Kunststofffilm nur auf einer Seite mit weiteren Beschichtungen versehen ist.

Als Material für den Kunststofffilm dient Polylactat (PLA).

Die Sperrschicht gegen Gase Dämpfe und Feuchtigkeit, die sog. Barriereschicht, kann durch eine Metallfolie aus beispielsweise Aluminium gebildet sein. Andere geeignete Materialien für Sperrschichten sind beispielsweise Filme aus Kunststoffen, wie Polyvinylidenchlorid (PVDC) oder Ethylvinylalkohol, oder eine Schicht aus keramischen Materialien, wie beispielsweise aus Silizium- oder Aluminiumoxid bzw. -nitrid, die in dünner Schicht, z.B. im Bereich von 10 - 500 nm, im Vakuum auf die Trägerfolie abgeschieden werden. Beispiele weiterer Sperrschichten sind metallische Schichten, z.B. aus Aluminium, die durch Sputtem auf dem Träger abgeschieden werden.

Im vorliegenden Fall ist insbesondere eine Metallisierung geeignet, dem Kunststofffilm und damit der Verpackungsfolie Barriereeigenschaften zu verleihen, welche den Durchtritt von Flüssigkeiten, Gasen, Dämpfen, Wasserdampf, Aromen oder Geruchsstoffen verhindern. Eine bevorzugte Metallisierung besteht aus Aluminium, welches beispielsweise durch Sputtern oder durch Abscheidung aus dem Vakuum auf den Kunststofffilm in einer Dicke von etwa 10 nm bis etwa 2 µm aufgetragen wird.

Als Schutzschicht für die Metallisierung wird zweckmässigerweise ein Lack auf der Basis von Nitrocelluloselack verwendet. Diese erste Schutzlackschicht dient zugleich als Druckträger. In diesem Fall wird die Bedruckung bevorzugt ebenfalls mit einer Schutzlackschicht auf der Basis von Nitrocelluloselack versehen. Der Auftrag der Heisssiegelschicht an vorbestimmten Positionen erfolgt wie die zweite Schutzlackschicht auf die Bedruckung.

Das Bedrucken des metallisierten und mit der ersten Schutzlackschicht versehenen Kunststofffilms kann mit allen bekannten Druckverfahren vorgenommen werden, so z.B. Buch-, Offset-, Flexo-, Sieb-, Helio- und Kupfertiefdruck, aber auch Laserdruck, Inkjet, elektrofotografische und magnetografische Druckverfahren. Die Wahl, welches Druckverfahren zur Anwendung kommt, hängt von der gewünschten Druckqualität, von den jeweiligen technischen Gegebenheiten und der Auflagenhöhe ab. Die zweite Schutzlackschicht schützt das Druckbild.

Die Heisssiegelschicht ist auf einem Lack auf der Basis von Copolymeren aus Ethylen und Vinylacetat oder Vinylacetat und Vinylchlorid aufgebaut.

Da die Heisssiegelschicht mit hoher Genauigkeit an den vorbestimmten Positionen aufgetragen werden muss, erfolgt deren Auftragung bevorzugt ebenfalls auf einer Druckmaschine über eine Druckmarkensteuerung (registered).

Die erfindungsgemässe Verpackungsfolie wird als Rollenware hergestellt. Bei einer ersten Art der Verpackung wird die Verpackungsfolie von der Rolle abgewickelt und zu einzelnen Folienblättern geschnitten. Die Folienblätter, welche das Verpackungsmaterial für je einen zu verpackenden quaderförmigen Block oder Würfel bilden, werden in einer speziellen Einrichtung durch Falten an die Seitenflächen des Blockes angelegt, wobei die Folie an zwei gegenüberliegenden Seitenflächen eingeschlagen wird und sich überlappt. In diesem Überlappungsbereich ist die Siegelschicht angeordnet. Bei einer zweiten Verpackungsart wird die Verpackungsfolie über eine Längsschweissnaht zu einem Schlauch geformt und nach dem Einschieben eines Würfels wird eine einzelne Verpakkungseinheit vom Schlauch abgeschnitten. Anschliessend erfolgt des Einschlagen der Folie an den offenen Seiten.

Die erfindungsgemässe Verpackungsfolie zeigt ein ausgezeichnetes Faltverhalten mit geringer Rückstellelastizität.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 den Schichtaufbau einer bevorzugten Ausführungsform einer Verpackungsfolie;
- Fig. 2 eine Schrägsicht auf einen mit der Verpackungsfolie von Fig. 1 durch Umwicklung bzw. Falten und Einschlagen verpackten Quader.

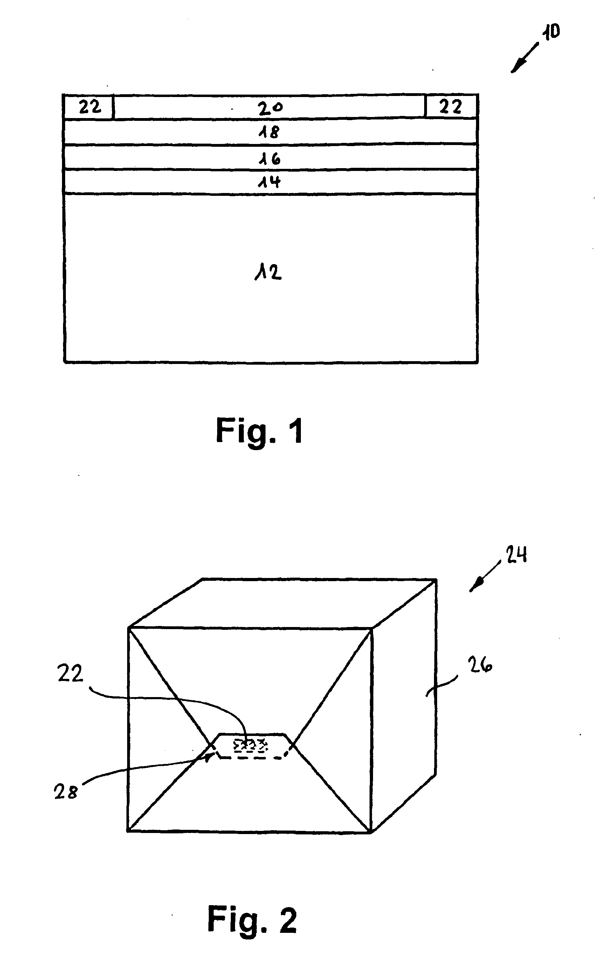

Ein Verbundmaterial 10 weist gemäss Fig. 1 folgenden Aufbau auf:
12 Kunststofffilm aus
   - orientiertem Polypropylen (OPP), 25 bis 45 µm, oder
   - Polyethylen hoher Dichte (PEHD), 20 bis 45 µm, oder
   - Polylactat (PLA), 15 bis 40 µm,
14 Barriereschicht aus Aluminium, im Vakuum auf den Kunststofffilm 12 aufgedampft, 10 nm bis 2 µm,
16 erste Schutzlackschicht aus einem Nitrocelluloselack, 1,1 ± 0,5 g/m²,
18 Bedruckung, z. B. durch Helio- oder Flexographie
20 zweite Schutzlackschicht aus Nitrocelluloselack, 4.0 ± 0,5 g/m²,
22 Heissiegelschicht, hergestellt durch Auftrag eines Lackes auf der Basis von
   - Copolymeren aus Ethylen und Vinylacetat, 4,0 ± 0,5 g/m², oder
   - Copolymeren aus Vinylacetat und Vinylchlorid, 4, 0 ± 0,5 g/m²
   - Acrylat, 4, 0 ± 0,5 g/m²

Bei der Herstellung der Verpackungsfolie 10 wird zunächst der Kunststofffilm 12 mit der Barriereschicht 14 versehen. Anschliessend erfolgt der Auftrag einer ersten Schutzschicht 16. Diese kann auch fehlen, wenn eine Bedruckung der Barriereschicht problemlos ist. Auf die erste Schutzlackschicht 16 oder bei fehlender Schutzlackschicht direkt auf die Barriereschicht 14 folgt die Bedruckung 18, welche mit der zweiten Schutzlackschicht 20 versehen wird.

Der Auftrag der Heissiegelschicht 22 auf der Bedruckung 18 erfolgt an vorbestimmten Positionen, an welchen bei der späteren Verpackung die Siegelung erfolgen soll.

Die freie Seite des Kunststofffilms 12 bildet die Innenseite, die zweite Schutzlackschicht 20 und die an vorbestimmten Positionen aufgetragene Heissiegelschicht 22 die Aussenseite der aus der Verpackungsfolie 10 hergestellten Verpackung.

Eine aus der Verpackungsfolie 10 hergestellte Verpackung 24 für ein quaderförmiges Produkt aus z.B. einer festen oder halbfesten Bouillonmasse liegt dem Füllgut gemäss Fig. 2 dicht an, die Seitenflächen 26 der Verpackung entsprechen den Seitenflächen des verpackten Bouillonblocks. An zwei einander gegenüberliegenden Seiten der Verpackung ist die Verpackungsfolie eingeschlagen. Im Überlappungsbereich 28 befindet sich die an vorbestimmten Positionen aufgetragene Heissiegelschicht 22. Die Siegelung erfolgt beispielsweise während des Durchlaufs des verpackten Blocks zwischen zwei beheizten Schienen.

## Patentansprüche

1. Verpackungsfollö zum Verpacken von quaderförmigen Nahrungsmittelprodukten, mit einem aus Polylactat (PLA) aufgebauten Kunststofffilm (12), einer auf dem Kunststofffilm (12) angeordneten Barriereschicht (14) gegen den Durchtritt von Wasserdampf und Gasen, einer Bedruckung (18), einer auf der Bedruckung (18) angeordneten Schutzlackschicht (20) und einer an vorbestimmten Positionen angeordneten Heisssiegelschicht (22),
**dadurch gekennzeichnet, dass**
die Bedruckung (18) auf der Barriereschicht (14) oder auf einer auf der Barriereschicht (14) angeordneten ersten Schutzlackschicht (16) angeordnet ist, und die Heissslegelschicht (22) auf einem Lack auf der Basis von Copolymeren aus Ethylen und Vinylacetat oder Vinylacetat und Vinylchlorid oder auf Acrylatbasis aufgebaut und auf der Bedruckung (18) angeordnet ist.

2. Verpackungsfolie nach Anspruch 1, **dadurch gekennzeichnet, dass** die Barriereschicht (14) eine aus Aluminium aufgebaute Metallisierung ist.

3. Verpackungsfolle nach Anspruch 1, **dadurch gekennzeichnet, dass** die Barriereschicht (14) ein Kunststofffilm aus Polyvinylidenchlorid (PVDC) oder eine aus dem Vakuum abgeschiedene, 10 - 500 nm dicke Schicht aus keramischen Materialien, vorzugsweise aus Silizium- oder Aluminiumoxid ist.

4. Verpackungsfolie nach einem der Ansprüche 1 bis 3, **dadurch gekennzeichnet, dass** die Schutzlackschichten (16, 20) auf der Basis von Nitrocelluloselack aufgebaut sind,

## Claims

1. Packaging film for packaging cuboid food products, comprising a plastics material film (12) made of polylactate (PLA), a barrier layer (14) to prevent penetration of water vapour and gases arranged on the plastics material film (12), a printed layer (18), a protective lacquer layer (20) arranged on the printed layer (18), and a heat sealing layer (22) arranged at predetermined positions, **characterised in that** the printed layer (18) is arranged on the barrier layer (14) or on a first protective lacquer layer (16) arranged on the barrier layer (14), and the heat sealing layer (22) is made of an ethylene and vinyl acetate copolymer-based lacquer, a vinyl acetate and vinyl chloride copolymer-based lacquer or an acrylate-based lacquer and is arranged on the printed layer (18).

2. Packaging film according to claim 1, **characterised in** the barrier layer (14) is a metal layer made of aluminium.

3. Packaging film according to claim 1, **characterised in that** the barrier layer (14) is a plastics material film made of polyvinylidene chloride (PVDC) or a vacuum-deposited, 10-500 nm thick layer of ceramics materials, preferably of silicon or aluminium oxide.

4. Packaging film according to any one of claims 1 to 3, **characterised in that** the protective lacquer layers (16, 20) are nitrocellulose lacquer-based.

## Revendications

1. Feuille d'emballage destinée à emballer des produits alimentaires de forme parallélépipédique, comprenant un film synthétique (12) fabriqué à partir de polylactate (PLA), une couche formant barrière (14) agencée sur le film synthétique (12) et s'opposant au passage de vapeur d'eau et de gaz, une impression (18), une couche de vernis de protection (20) agencée sur l'impression (18), et une couche de scellage à chaud (22) agencée en des positions prédéterminées,
**caractérisée**
**en ce que** l'impression (18) est agencée sur la couche formant barrière (14) ou sur une première couche de vernis de protection (16) agencée sur la couche formant barrière (14), et la couche de scellage à chaud (22) est réalisée à partir d'un vernis à base de copolymères d'éthylène et d'acétate de vinyle ou d'acétate de vinyle et de chlorure de vinyle ou à base d'acrylate, et est agencée sur l'impression (18).

2. Feuille d'emballage selon la revendication 1,
**caractérisée en ce que** la couche formant barrière (14) est une métallisation réalisée en aluminium.

3. Feuille d'emballage selon la revendication 1,
**caractérisée en ce que** la couche formant barrière (14) est un film synthétique de polychlorure de vinylidène (PVDC), ou bien une couche d'une épaisseur de 10-500 nm, déposée sous vide, en matériaux céramiques, de préférence en oxyde de silicium ou oxyde d'aluminium.

4. Feuille d'emballage selon l'une des revendications 1 à 3, **caractérisée en ce que** les couches de vernis de protection (16, 20) sont réalisées à base de vernis nitrocellulosique.
